# EUROPEAN PATENT APPLICATION

(11) **EP 4 534 223 A1**
(43) Date of publication of application: **09.04.2025**
(21) Application number: 22943727.2
(22) Date of filing: 25.05.2022
(51) Int. Cl.: B23B 27/14, B23B 27/20, C22C 26/00, C22C 1/05, C04B 35/52

(54) **SINTERED BODY AND CUTTING TOOL**

(71) Applicant: Sumitomo Electric Hardmetal Corp., Itami-shi, Hyogo 664-0016 (JP)
(72) Inventor: MATSUI, Hiroki, Itami-shi, Hyogo 664-0016 (JP); IWASAKI, Hirotsugu, Itami-shi, Hyogo 664-0016 (JP); MATSUDA, Yusuke, Itami-shi, Hyogo 664-0016 (JP)
(74) Representative: Boult Wade Tennant LLP
(86) International application number: PCT/JP2022/021417
(87) International publication number: WO 2023/228324

(57) **Abstract**

This sintered body comprises diamond particles and a binding material. The boron concentration in the diamond particles is 0.001-0.9 mass% inclusive. The boron concentration in the binding material is 0.5-40 mass% inclusive.

## Description

### TECHNICAL FIELD

The present disclosure relates to a sintered material and a cutting tool.

### BACKGROUND ART

Patent literature 1 (Japanese Unexamined Patent Application Publication No. 2008-133172) describes a sintered material. The sintered material described in patent literature 1 is formed by mixing diamond powder doped with boron and carbonate powder, and heating and pressurizing the mixture.

Patent literature 2 (Japanese Unexamined Patent Application Publication No. 58-199777) describes a sintered material. The sintered material described in patent literature 2 is formed by mixing diamond powder and catalyst metal powder, and heating and pressurizing the mixture. The catalyst metal powder contains boron carbide-added powder and metal powder (iron, nickel, cobalt, etc.).

### CITATION LIST

### PATENT LITERATURE

Patent literature 1: Japanese Unexamined Patent Application Publication No. 2008-133172
Patent literature 2: Japanese Unexamined Patent Application Publication No. 58-199777

### SUMMARY OF THE INVENTION

A sintered material of the present disclosure includes diamond particles and a binder. Each of the diamond particles has a boron concentration of 0.001 mass% to 0.1 mass%. The binder has a boron concentration of 0.01 mass% to 0.5 mass%.

### BRIEF DESCRIPTION OF THE DRAWINGS

FIG. 1 is a plan view of a cutting insert 100.
FIG. 2 is a perspective view of cutting insert 100.
FIG. 3 is a manufacturing step chart showing a method of manufacturing a sintered material of a cutting part 20.

### DETAILED DESCRIPTION

### [Problems to be Solved by Present Disclosure]

As a result of intensive studies, the present inventors have found that there is room for improvement in tool life when the sintered material described in patent literature 1 and the sintered material described in patent literature 2 are applied to a cutting tool. The present disclosure provides a sintered material which can improve tool life when applied to a cutting tool.

### [Advantageous Effect of the Present Disclosure]

The sintered material of the present disclosure can improve tool life when applied to a cutting tool.

### [Description of Embodiments]

First, embodiments of the present disclosure will be listed and described.
(1) A sintered material according to an embodiment includes diamond particles and a binder. Each of the diamond particles has a boron concentration of 0.001 mass% to 0.1 mass%. The binder has a boron concentration of 0.01 mass% to 0.5 mass%.
   According to the sintered material of the above (1), when the sintered material is applied to a cutting tool, the tool life can be improved.
(2) In the sintered material according to the above (1), the binder may have a boron concentration of 0.05 mass% to 0.5 mass%.
(3) The sintered material according to the above (1) or (2) may further include a compound precipitated within the binder. The compound may contain at least two or more among cobalt, boron, and carbon. A value calculated by dividing a peak intensity of the compound in X-ray diffractometry by a peak intensity of diamond in X-ray diffractometry may be 0.15 or less.
(4) In the sintered material according to the above (3), the compound may be at least one of Co_{2 2} B₄ C₂, W₂ Co_{2 1} B₆, W₂ Co₂ B₆, or CoWB.
(5) In the sintered material according to the above (3) or (4), the value calculated by dividing the peak intensity of the compound in X-ray diffractometry by the peak intensity of diamond in X-ray diffractometry may be 0.01 to 0.15.
(6) In the sintered material according to any one of the above (1) to (5), a resistivity of the sintered material may be 3.0 Ω·cm or less as measured with the binder being removed.
   According to the sintered material of the above (6), when the sintered material is applied to a cutting tool, generation of triboplasma can be suppressed.
(7) In the sintered material according to any one of the above (1) to (6), the diamond particles may have an average particle size of 0.5 µm to 50 µm. A ratio of the diamond particles within the sintered material may be 80 vol% to 99 vol%.
(8) In the sintered material according to any one of the above (1) to (7), the binder may contain at least one selected from the group consisting of an elemental metal, an alloy, and an intermetallic compound. The elemental metal, the alloy, and the intermetallic compound may contain at least one metallic element selected from the group consisting of group 4 elements in the periodic table, group 5 elements in the periodic table, group 6 elements in the periodic table, iron, aluminum, silicon, cobalt, and nickel.
(9) In the sintered material according to any one of the above (1) to (8), the binder at least may contain cobalt.
(10) A cutting tool according to an embodiment includes a cutting part. The cutting part is formed of the sintered material according to any one of the above (1) to (9).

According to the cutting tool of the above (10), the tool life can be improved.

### [Detailed Description of Embodiments]

The details of embodiments of the present disclosure will be described with reference to the drawings. In the drawings, the same or corresponding parts are denoted by the same reference numerals, and the description thereof will not be repeated.

A cutting tool according to the embodiment is, for example, a cutting insert 100. The cutting tool according to the embodiment is not limited to cutting insert 100, but cutting insert 100 will be described below as an example of the cutting tool according to the embodiment. Other examples of the cutting tool according to the embodiment include a drill, an end mill, and a wear resistant tool.

### (Configuration of Cutting Tool According to Embodiment)

A configuration of cutting insert 100 will be described.

### <Schematic Configuration of Cutting Insert 100>

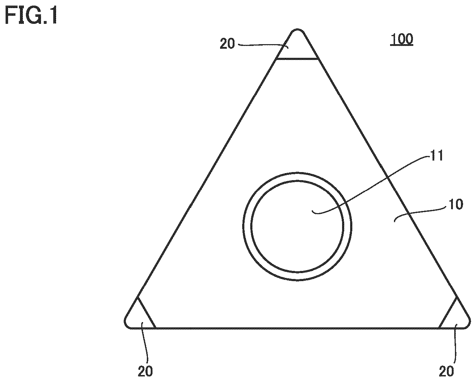

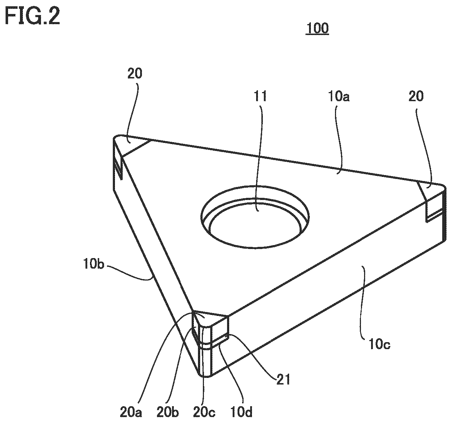

FIG. 1 is a plan view of cutting insert 100. FIG. 2 is a perspective view of cutting insert 100. As shown in FIGs. 1 and 2, cutting insert 100 includes a base member 10 and cutting parts 20. Cutting insert 100 has a polygonal shape (for example, a triangular shape) in a plan view. The polygonal shape (triangular shape) do not have to be a strict polygonal shape (triangular shape). More specifically, the corners of cutting insert 100 in a plan view may be rounded.

Base member 10 has a polygonal shape (for example, a triangular shape) in a plan view. Base member 10 has a top surface 10a, a bottom surface 10b, and a side surface 10c. Top surface 10a and bottom surface 10b are end surfaces of base member 10 in a thickness direction. Bottom surface 10b is a surface opposite to top surface 10a of base member 10 in the thickness direction. Side surface 10c is a surface contiguous with top surface 10a and bottom surface 10b.

Top surface 10a has attachment portions 10d. Attachment portions 10d are located at corners of top surface 10a in a plan view. A distance between top surface 10a and bottom surface 10b in attachment portion 10d is smaller than a distance between top surface 10a and bottom surface 10b in the portion other than attachment portion 10d. That is, there is a step between attachment portion 10d and the portion of top surface 10a other than attachment portion 10d.

A through-hole 11 is formed in base member 10. Through-hole 11 extends through base member 10 in the thickness direction. Through-hole 11 is formed at the center of base member 10 in a plan view. Cutting insert 100 is used for cutting, for example, by inserting a fixing member (not shown) into through-hole 11 and fastening the fixing member to a tool holder (not shown). However, through-hole 11 do not have to be formed in base member 10.

Base member 10 is formed of, for example, cemented carbide. Cemented carbide is a composite material obtained by sintering carbide particles and a binder. The carbide particles are particles of, for example, tungsten carbide, titanium carbide, tantalum carbide, or the like. The binder is, for example, cobalt, nickel, iron, or the like. However, base member 10 may be formed of a material other than cemented carbide.

Cutting part 20 is attached to attachment portion 10d. Cutting part 20 is attached to base member 10 by brazing, for example. Cutting part 20 includes a rake face 20a, a flank face 20b, and a cutting edge 20c. Rake face 20a is contiguous with the portion of top surface 10a other than attachment portion 10d. Flank face 20b is contiguous with side surface 10c. Cutting edge 20c is formed on a ridge line between rake face 20a and flank face 20b. A back metal 21 may be disposed on a bottom surface (a surface opposite to rake face 20a) of cutting part 20. Back metal 21 is formed of, for example, cemented carbide.

### <Detailed Configuration of Sintered Material of Cutting Part 20>

Cutting part 20 is formed of a sintered material containing diamond particles and a binder. The diamond particles within the sintered material of cutting part 20 preferably have an average particle size of 0.5 µm to 50 µm. A ratio (volume ratio) of the diamond particles within the sintered material of cutting part 20 is preferably 80 vol% to 99 vol%. The binder contains, for example, cobalt. The binder may contain tungsten or titanium in addition to cobalt. The component having the highest content in the binder is preferably cobalt.

The average particle size of the diamond particles within the sintered material of cutting part 20 is calculated by the following method.

In the calculation of the average particle size of the diamond particles within the sintered material of cutting part 20, first, a sample including a cross section is cut out from any position of cutting part 20. The sample is cut out by using, for example, a focused ion beam apparatus, a cross polisher apparatus, or the like.

Second, the cross section of the cut sample is observed with a scanning electron microscope (SEM). By this observation, a reflected electron image (hereinafter, referred to as "SEM image") of the cross section of the cut sample is obtained. In the observation with the SEM, the magnification is adjusted so that 100 or more diamond particles are included in the measurement field of view. The SEM images are acquired at five positions in the cross section of the cut sample.

Third, the SEM image is subjected to image processing to acquire the distribution of the particle sizes of the diamond particles included in the measurement field of view. The distribution of the particle sizes of the diamond particles is a number-based distribution. This image processing is performed using, for example, Win ROOF ver. 7.4.5, WinROOF2018, or the like manufactured by Mitani Corporation. The particle size of each diamond particle is obtained by calculating the circle equivalent diameter from the area of each diamond particle obtained as a result of image processing. Note that diamond particles partially outside the measurement field of view are not considered when the distribution of particle sizes of the diamond particles is acquired.

Fourth, the median diameter of the diamond particles included in the measurement field of view is determined from the distribution of the particle sizes of the diamond particles included in the measurement field of view obtained as described above. The value obtained by averaging the determined median diameters for five SEM images is regarded as the average particle size of the diamond particles within the sintered material of cutting part 20.

The ratio of diamond particles within the sintered material of cutting part 20 is calculated by the following method. In the calculation of the ratio of diamond particles within the sintered material of cutting part 20, first, a sample including a cross section is cut out from any position of cutting part 20. The sample is cut out by using, for example, a focused ion beam apparatus, a cross polisher apparatus, or the like.

Second, the cross section of the cut sample is observed with the SEM. By this observation, an SEM image of the cross section of the cut sample is obtained. In the observation with the SEM, the magnification is adjusted so that 100 or more diamond particles are included in the measurement field of view. The SEM images are acquired at five positions in the cross section of the cut sample.

Third, the SEM image is subjected to image processing to calculate the ratio of diamond particles included in the measurement field of view. This image processing is performed by performing binarization processing of the SEM image using, for example, Win ROOF ver. 7.4.5, WinROOF2018, or the like manufactured by Mitani Corporation. The dark field in the SEM image after the binarization processing corresponds to the region where diamond particles are present. A value obtained by dividing the area of the dark field by the area of the measurement region is regarded as the volume ratio of the diamond particles within the sintered material of cutting part 20.

A boron concentration in the diamond particles is 0.001 mass% to 0.1 mass%. A boron concentration in the binder is 0.01 mass% to 0.5 mass%. The boron concentration in the binder is preferably equal to or more than the boron concentration in the diamond particles (that is, the value obtained by subtracting the boron concentration in the diamond particles from the boron concentration in the binder is preferably 0 mass% or more). The binder may have a boron concentration of 0.05 mass% to 0.5 mass%.

The boron concentration in each of the diamond particles and the boron concentration in the binder are measured by the following method.

In the measurement of the boron concentration in each of the diamond particles and the boron concentration in the binder, first, a sample is cut out from any position of cutting part 20. Second, the cut sample is acid-treated. By this acid treatment, substantially all of the binder components contained in the sample are dissolved in the acid. That is, the sample after the acid treatment is substantially composed of only diamond particles.

The acid treatment is performed using a hydrofluoric-nitric acid aqueous solution. The hydrofluoric-nitric acid aqueous solution is produced by mixing 50 percent concentration aqueous solution of hydrogen fluoride and 60 percent concentration aqueous solution of nitric acid in a ratio of 1:1. The acid treatment is performed by immersing the sample in the hydrofluoric-nitric acid aqueous solution and maintaining the sample at 200°C for 48 hours.

Third, the boron concentration in the diamond particle is measured by performing glow discharge mass spectrometry on the sample after the acid treatment. In addition, the boron concentration in the binder is measured by performing an induced coupled plasma analysis on the acid used in the acid treatment.

The compound may be precipitated in the combined body. The compound precipitated within the combined body contains at least two or more among cobalt, boron and carbon. The compound precipitated within the combined body is, for example, at least one of Co_{2 2} B₄ C₂, W₂ Co_{2 1} B₆, W₂ Co₂ B₆, or CoWB.

A value calculated by dividing a peak intensity of the compound by a peak intensity of diamond when X-ray diffractometry is performed on the sintered material of cutting part 20 is, for example, 0.15 or less. The value calculated by dividing the peak intensity of the compound by the peak intensity of diamond when X-ray diffractometry is performed on the sintered material of cutting part 20 is preferably 0.01 to 0.15. Note that the value calculated by dividing the peak intensity of the compound by the peak intensity of the diamond when X-ray diffractometry is performed on the sintered material of cutting part 20 is, for example, more than 0.

The value calculated by dividing the peak intensity of the compound by the peak intensity of the diamond when X-ray diffractometry is performed on the sintered material of cutting part 20 is obtained by the following method. First, a sample including a cross section is cut out from any position of cutting part 20. The sample is cut out by using, for example, a focused ion beam apparatus, a cross polisher apparatus, or the like. Second, the compositions of the diamond particles and the binder are obtained by an X-ray diffractometry method in the cross section. Third, an X-ray diffractometry pattern is obtained by analyzing the cross section by the X-ray diffractometry method. The analysis by the X-ray diffractometry method was performed by the θ-2θ method using the following conditions: characteristic X-rays were Cu-Kα rays having a wavelength of 1.54 angstroms, the tube voltage was 40 kV, the tube current was 15 mA, the filter was a multilayer mirror, and the optical system was a focusing method.

Fourth, based on the X-ray diffractometry pattern and the composition of the diamond particles and the binder, the peak intensity (peak height, cps) derived from each component is obtained. The peak intensity is obtained using the first peak of each component. Fifth, by dividing the total peak intensity of the compounds in the binder obtained as described above by the total peak intensity of the diamond, a value calculated by dividing the peak intensity of the compound by the peak intensity of the diamond when X-ray diffractometry is performed on the sintered material of cutting part 20 is obtained.

The sintered material of cutting part 20 preferably has a resistivity of 3.0 Ω·cm or more after removing the binder. The removal of the binder is performed by the same acid treatment as that used in the measurement of the boron concentration in the diamond particles. The resistivity of the sintered material is measured by a four terminal method. The resistivity of the sintered material is measured using 182 SENSITIVE DIGITAL VOLTMETER manufactured by KEITHLEY as a measuring device under the conditions of a measurement temperature of 22°C, a measurement moisture of 60%, and an interelectrode distance of 0.5 mm. As a probe of the measuring apparatus, a four point probe manufactured by NTT Advanced Technology Corporation is used. A sample of 3 mm × 1 mm × 6 mm is cut out from the sintered material of cutting part 20, and is subjected to the measurement of resistivity.

Since boron is not contained in the diamond powder prepared in a powder preparation step S1 and boron is incorporated into the diamond particles in a sintering step S3, boron is unevenly distributed in the vicinity of the surface of the diamond particles. Thus, when the boron concentration in the diamond particles is the same, the resistivity of the sintered material of cutting part 20 after removing the binder is smaller than the resistivity of the sintered material obtained by sintering the diamond powder doped with boron in advance.

### <Method of Manufacturing Sintered Material of Cutting Part 20>

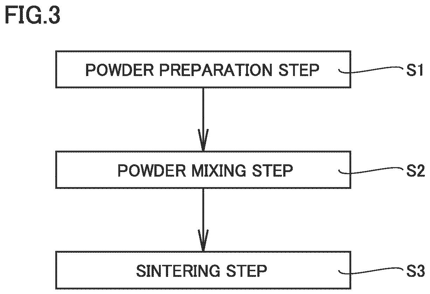

FIG. 3 is a manufacturing step chart showing a method of manufacturing a sintered material of cutting part 20. As shown in FIG. 3, the method of manufacturing the sintered material of cutting part 20 includes powder preparation step S1, a powder mixing step S2, and sintering step S3.

In powder preparation step S1, diamond powder, binder powder, and boron-added powder are prepared. The diamond powder is a powder of diamond, and the binder powder is a powder formed of a material of the binder. The boron-added powder is a powder of boron or boron oxide. A ratio of the diamond powder, the binder powder, and the boron-added powder is appropriately selected according to the volume ratio of the diamond particles in the sintered material of cutting part 20 and the boron concentration in the diamond particles and the binder.

Powder mixing step S2 is divided into, for example, a first step and a second step performed after the first step. In the first step, the boron-added powder is pulverized. The boron-added powder is pulverized so that the average particle size of the boron-added powder is 5 µm or less, for example. The boron-added powder may be pulverized after mixing the boron-added powder with the diamond powder and the binder powder. The boron-added powder is preferably pulverized so that the average particle size of the boron-added powder is 0.5 µm or less. The average particle size of the boron-added powder is measured by a particle size distribution measuring apparatus, such as a Microtrac. As the average particle size of the boron-added powder after pulverization becomes smaller, boron is more easily incorporated into the diamond particles in sintering step S3. In the second step, the diamond powder, the binder powder, and the boron-added powder after pulverization are mixed. This mixing is performed using, for example, an attritor or a ball mill. However, the mixing method is not limited to these. In the following description, a mixture of diamond powder, binder powder and boron-added powder is referred to as "mixed powder".

In sintering step S3, the mixed powder is sintered. The sintering is performed by placing the mixed powder in a container and holding the mixed powder at a predetermined sintering temperature under a predetermined sintering pressure. The container is made of a high-melting point metal, such as tantalum or niobium, to prevent impurities from being mixed into the mixed powder (sintered material). The sintering temperature is appropriately selected according to the boron concentration in the diamond particles and the boron concentration in the binder. The sintering temperature is, for example, 1500°C to 1700°C. As the sintering temperature increases, boron is more likely to diffuse into the diamond particles, but when the sintering temperature is too high, graphitization of diamond is likely to proceed, and the strength of the binder decreases. The sintering pressure is, for example, 4.5 GPa or more and 6.5 GPa or more. The holding time is, for example, 40 minutes or more and less than 60 minutes.

### (Effects of Cutting Tool According to Embodiment)

Hereinafter, the effects of cutting insert 100 will be described.

The presence of boron in the diamond particles improves the oxidation resistance of the diamond particles, which in turn improves the wear resistance of cutting part 20. According to the findings of the present inventors, when a boron concentration in the diamond particles is less than 0.001 mass%, the effect of boron on improving the oxidation resistance of the diamond particles is poor. On the other hand, when a boron concentration in the diamond particles is more than 0.1 mass%, the amount of boron in the diamond particles becomes excessive, the hardness of the diamond particles decreases, and the wear resistance of cutting part 20 decreases instead.

In sintering step S3, the binder powder is melted, and the boron-added powder is dissolved in the melted binder. Then, a part of the diamond powder is dissolved in the melted binder, and the diamond particles are reprecipitated, whereby the bonding (necking) of the diamond particles proceeds. Since the boron in the dissolved binder acts as a sintering aid, necking between the diamond particles is less likely to occur when a boron concentration in the binder is less than 0.01 mass%. According to the findings of the present inventors, when a boron concentration in the binder is more than 0.5 mass%, a compound containing cobalt, boron, carbon, or the like is likely to precipitate within the binder. The compounds in the binder reduce the strength of the binder and reduce the wear resistance.

In cutting insert 100, a boron concentration in the diamond particles contained in the sintered material of cutting part 20 is 0.001 mass% to 0.1 mass%, and thus, the oxidation resistance of the diamond particles is improved while the hardness of the diamond particles is maintained. In cutting insert 100, a boron concentration in the binder contained in the sintered material of cutting part 20 is 0.01 mass% to 0.5 mass%, and thus, the neck gloss strength between the diamond particles can be kept, and the strength of the binder can be kept. Thus, according to cutting insert 100, the wear resistance of cutting part 20 is improved.

When the diamond particles in the sintered material of cutting part 20 have an average particle size of less than 0.5 µm, the surface area of the diamond particles increases, and thus, oxidation on the surface of the diamond particles is likely to proceed. When the diamond particles in the sintered material of cutting part 20 have an average particle size of more than 50 µm, the toughness of the sintered material of cutting part 20 is reduced, and fracture is likely to occur. Thus, by setting the average particle size of the diamond particles in the sintered material of cutting part 20 to 0.5 µm to 50 µm, the wear resistance of cutting part 20 is further improved.

When a ratio of the diamond particles within the sintered material of cutting part 20 is less than 80 vol%, the hardness of cutting part 20 is reduced. Thus, by setting the ratio of diamond in the sintered material of cutting part 20 to 80 vol% to 99 vol%, the wear resistance of cutting part 20 is further improved.

When cutting part 20 is charged by contact between cutting part 20 and a workpiece, triboplasma is generated between cutting part 20 and the workpiece, and wear of cutting part 20 may easily progress. When the sintered material of cutting part 20 has a resistivity of 3.0 Ω·cm or less as measured after removing the binder, cutting part 20 is less likely to be charged by contact with the workpiece, and the progress of wear of cutting part 20 due to the generation of triboplasma can be suppressed.

### (Example)

In order to evaluate the relationship between the particle size of the boron-added powder prepared in powder preparation step S1 and the boron concentration in the binder contained in the sintered material of cutting part 20, samples 1 and 2 were prepared as samples of the sintered material. As shown in Table 1, the ratio of the mass of the boron-added powder to the mass of the binder powder (the value obtained by dividing the mass of the boron-added powder by the mass of the binder powder), the sintering pressure, the sintering temperature, and the sintering time were the same in samples 1 and 2. However, the average particle size of the boron-added powder was 5 µm or less in sample 1, whereas the average particle size of the boron-added powder was more than 5 µm in sample 2.

**[Table 1]**

| | Ratio of Boron Powder to Binder Powder(%) | Average Particle Size of Boron Powder (µm) | Sintering Pressure (GPa) | Sintering Temperature (°C) | Sintering Time (min) | Boron Concentration in Diamond Particle (mass%) | Boron Concentration in Binder (mass%) |
|---|---|---|---|---|---|---|---|
| Sample 1 | 5 | 0.5 | 5 | 1600 | 60 | 0.08 | 0.25 |
| Sample 2 | 5 | 10 | 5 | 1600 | 60 | 0.06 | 0.8 |

As shown in Table 1, in sample 1, the binder had a boron concentration in a range of 0.01 mass% to 0.5 mass%. In sample 2, the binder had a boron concentration not in the range of 0.01 mass% to 0.5 mass%. In samples 1 and 2, the diamond particles had a boron concentration in a range of 0.001 mass% to 0.1 mass%. From this comparison, it was found that the binder can have a boron concentration of 0.01 mass% to 0.5 mass% by making the boron-added powder have an average particle size of 5 µm or less.

In order to evaluate the relationship between the boron concentration in the diamond particles and the binder contained in the sintered material of cutting part 20 and the wear resistance of cutting part 20, samples 3 to 24 were prepared as samples of the sintered material. In samples 3 to 24, as shown in Table 2, the boron concentrations in the diamond particles and the binder contained in the sintered material of cutting part 20 were changed.

**[Table 2]**

| | Ratio of Boron Powder to Binder Powder (%) | Average Particle Size of Boron Powder (µm) | Sintering Pressure (GPa) | Sintering Temperature (°C) | Sintering Time (min) | Average Particle Size of Diamond Particles (µm) | Ratio of Diamond Particles (vol%) | Boron Concentration in Diamond Particle (mass%) | Boron Concentration in Binder (mass%) |
|---|---|---|---|---|---|---|---|---|---|
| Sample 3 | 5 | 0.5 | 5 | 1600 | 40 | 50 | 90 | 0.04 | 0.42 |
| Sample 4 | 5 | 0.5 | 5 | 1600 | 40 | 30 | 90 | 0.07 | 0.33 |
| Sample 5 | 5 | 0.5 | 5 | 1600 | 40 | 3 | 90 | 0.08 | 0.25 |
| Sample 6 | 5 | 0.5 | 5 | 1600 | 40 | 0.5 | 90 | 0.06 | 0.36 |
| Sample 7 | 5 | 0.5 | 6 | 1600 | 40 | 3 | 95 | 0.084 | 0.2 |
| Sample 8 | 5 | 0.5 | 4.5 | 1600 | 50 | 3 | 83 | 0.05 | 0.4 |
| Sample 9 | 2 | 0.5 | 5 | 1600 | 40 | 3 | 90 | 0.09 | 0.13 |
| Sample 10 | 2 | 0.5 | 6 | 1650 | 40 | 3 | 92 | 0.093 | 0.1 |
| Sample 11 | 2 | 0.5 | 6.5 | 1550 | 40 | 3 | 91 | 0.089 | 0.14 |
| Sample 12 | 2 | 0.5 | 5 | 1700 | 40 | 3 | 91 | 0.09 | 0.13 |
| Sample 13 | 2 | 0.5 | 5 | 1500 | 40 | 3 | 90 | 0.088 | 0.12 |
| Sample 14 | 0.5 | 0.5 | 5 | 1500 | 40 | 3 | 90 | 0.001 | 0.05 |
| Sample 15 | 0.5 | 0.5 | 5 | 1700 | 40 | 3 | 90 | 0.06 | 0.01 |
| Sample 16 | 5 | 0.5 | 5 | 1600 | 40 | 55 | 90 | 0.02 | 0.5 |
| Sample 17 | 5 | 0.5 | 5 | 1600 | 40 | 0.3 | 90 | 0.04 | 0.41 |
| Sample 18 | 5 | 0.5 | 4.5 | 1600 | 40 | 3 | 77 | 0.02 | 0.48 |
| Sample 19 | Not Added | - | 5 | 1600 | 40 | 3 | 90 | Detection Limit or Less | 0 |
| Sample 20 | 7 | 0.5 | 5 | 1600 | 40 | 3 | 85 | 0.08 | 0.6 |
| Sample 21 | 5 | 10 | 5 | 1600 | 40 | 3 | 85 | 0.06 | 0.8 |
| Sample 22 | 0.5 | 10 | 5 | 1600 | 40 | 3 | 90 | 0.0005 | 0.48 |
| Sample 23 | 5 | 0.5 | 5 | 1600 | 60 | 3 | 90 | 0.15 | 0.3 |
| Sample 24 | 0.5 | 0.5 | 5 | 1600 | 40 | 3 | 90 | 0.05 | 0.005 |

A condition A is that the diamond particles have a boron concentration of 0.001 mass% or more and 0.1 mass% or more, and a condition B is that the binder has a boron concentration of 0.01 mass% to 0.1 mass%. Samples 3 to 18 satisfied both the condition A and the condition B. At least one of the condition A and the condition B was not satisfied in samples 19 to 24.

In order to perform the cutting test, cutting inserts having cutting parts 20 formed using samples 3 to 24 were prepared. The cutting inserts had a shape corresponding to the cutting insert SNEW1204ADFR manufactured by Sumitomo Electric Hardmetal Corp. The cutting insert was attached to the holder RF4160R manufactured by Sumitomo Electric Hardmetal Corp., and subjected to a milling process. The milling process was performed with a feed of 0.2 mm/t and a depth of cut of 0.6 mm. This cutting was dry machining in which no coolant was supplied. The workpiece subjected to the cutting had dimensions of 90 mm × 90 mm × 90 mm, and the material of the workpiece subjected to the cutting was a glass-containing resin. In the cutting test, the evaluation was made by the number of passes that could be processed until the average flank face wear amount reached 250 µm.

**[Table 3]**

| | Value Calculated by Dividing Peak Intensity of Compound in Binder in X-Ray Diffractometry by Peak Intensity of Diamond in X-Ray Diffractometry | Compound in Binder | Number of Passes That Could Be Processed |
|---|---|---|---|
| Sample 3 | 0.09 | Co₂₂B₄C₂, W₂Co₂₁B₆ | 153 |
| Sample 4 | 0.084 | Co₂₂B₄C₂, W₂Co₂₁B₆ | 160 |
| Sample 5 | 0.068 | Co₂₂B₄C₂, W₂Co₂₁B₆ | 195 |
| Sample 6 | 0.085 | Co₂₂B₄C₂, W₂Co₂₁B₆ | 143 |
| Sample 7 | 0.056 | Co₂₂B₄C₂, W₂Co₂₁B₆ | 190 |
| Sample 8 | 0.089 | Co₂₂B₄C_{2,} W₂Co₂₁B₆ | 140 |
| Sample 9 | 0.023 | Co₂₂B₄C_{2,} W₂Co₂₁B₆ | 200 |
| Sample 10 | 0.025 | Co₂₂B₄C₂ | 180 |
| Sample 11 | 0.026 | W₂CO₂B₆ | 150 |
| Sample 12 | 0.023 | CoWB | 165 |
| Sample 13 | 0.024 | B₄C | 155 |
| Sample 14 | 0.015 | W₂CO₂₁B₆ | 160 |
| Sample 15 | 0.01 | CoWB | 145 |
| Sample 16 | 0.12 | Co₂₂B₄C₂,W₂Co₂₁B₆ | 130 |
| Sample 17 | 0.09 | Co₂₂B₄C_{2,} W₂Co₂₁B₆ | 125 |
| Sample 18 | 0.11 | Co₂₂B₄C₂,W₂Co₂₁B₆ | 127 |
| Sample 19 | 0 | Not Detected | 55 |
| Sample 20 | 0.16 | Co₂₂B₄C_{2,} W₂Co₂₁B₆ | 60 |
| Sample 21 | 0.17 | Co₂₂B₄C_{2,} W₂Co₂₁B₆ | 60 |
| Sample 22 | 0.15 | Co₂₂B₄C₂,W₂Co₂₁B₆ | 65 |
| Sample 23 | 0.08 | Co₂₂B₄C₂,W₂Co₂₁B₆ | 65 |
| Sample 24 | 0.015 | Co₂₂B₄C₂,W₂Co₂₁B₆ | 47 |

As shown in Table 3, the number of passes that could be processed was larger in the cutting inserts in which cutting part 20 was formed using samples 3 to 18 than in the cutting inserts in which cutting part 20 was formed using samples 19 to 24. As described above, both the condition A and the condition B were satisfied in samples 3 to 18, whereas at least one of the condition A and the condition B was not satisfied in samples 19 to 24. From this comparison, it was found that the wear resistance of cutting part 20 is improved by satisfying both the condition A and the condition B.

A condition C is that the diamond particles have an average particle size of 0.5 µm to 50 µm. A condition D is that a ratio of diamond particles within the sintered material is 80 vol% to 99 vol%. In samples 3 to 15, the condition C and the condition D were satisfied in addition to the condition A and the condition B. In samples 16 to 18, the condition A and the condition B were satisfied, but any one of the condition C or condition D was not satisfied.

In addition, the number of passes that could be processed was larger in the cutting inserts in which cutting part 20 was formed using samples 3 to 15 than in the cutting inserts in which cutting part 20 was formed using samples 16 to 18. From this comparison, it was found that the wear resistance of cutting part 20 was further improved by further satisfying the condition C and the condition D.

Table 3 also shows the value calculated by dividing a peak intensity of the compound in X-ray diffractometry by a peak intensity of diamond in X-ray diffractometry. In samples 3 to 18, the value calculated by dividing the peak intensity of the compound in X-ray diffractometry by the peak intensity of diamond in X-ray diffractometry was 0.15 or less. In samples 20 and 21 in which the binder had a boron concentration of more than 0.5 mass%, the value calculated by dividing the peak intensity of the compound in X-ray diffractometry by the peak intensity of diamond in X-ray diffractometry was more than 0.15. From this, it was found that by setting the binder to have a boron concentration of 0.5 mass% or less, the value calculated by dividing the peak intensity of the compound in X-ray diffractometry by the peak intensity of diamond in X-ray diffractometry can be set to 0.15 or less, that is, the precipitation of the compound in the binder could be suppressed.

In order to evaluate the influence of the doping of the diamond powder with boron in advance on the resistivity of the sintered material after removing the binder, samples 25 and 26 were prepared as samples of the sintered material. As shown in Table 4, the boron concentration in the diamond particles of sample 25 is the same as that of sample 26, and the boron concentration in the binder of sample 25 is the same as that of sample 26. Sample 25 was formed using diamond powder not doped with boron. Sample 26 was one in which half of the diamond powder had been doped with boron in advance.

**[Table 4]**

| | Ratio of Boron Powder to Binder Powder (%) | Average Particle Size of Boron Powder (µm) | Sintering Pressure (GPa) | Sintering Temperature (°C) | Sintering Time (min) | Average Particle Size of Diamond Particles (µm) | Ratio of Diamond Particles (vol%) | Boron Concentration in Diamond Particle (mass%) | Boron Concentration in Binder (mass%) |
|---|---|---|---|---|---|---|---|---|---|
| Sample 25 | 5 | 0.5 | 4.5 | 1600 | 50 | 3 | 83 | 0.05 | 0.4 |
| Sample 26 | 2 | 0.5 | 5 | 1600 | 50 | 3 | 90 | 0.05 | 0.4 |

As shown in Table 5, in sample 25, the resistivity of the sintered material after removing the binder was in the range of 3.0 Ω·cm or less. On the other hand, in sample 26, the resistivity of the sintered material after removing the binder was more than 3.0 Ω·cm. From this comparison, it was found that when the diamond powder was not doped with boron in advance, boron was unevenly distributed on the surface of the diamond particles even if the boron concentration in the diamond particles was the same, and the resistivity of the sintered material after removing the binder was improved.

**[Table 5]**

| | Resistivity of Sintered Material After Removing Binder (Ω·cm) |
|---|---|
| Sample 25 | 2.87 |
| Sample 26 | 3.23 |

### (Modification)

In the above description, the binder contained in the sintered material of cutting part 20 is cobalt, but the binder contained in the sintered material of cutting part 20 is not limited to cobalt.

The binder included in the sintered material of cutting part 20 may contain at least one selected from the group consisting of an elemental metal, alloy, and an intermetallic compound. The elemental metal, the alloy and the intermetallic compound contain at least one metallic element selected from the group consisting of group 4 elements in the periodic table (e.g., titanium, zirconium, hafnium), group 5 elements in the periodic table (e.g., vanadium, tantalum, niobium), group 6 elements in the periodic table (e.g., chromium, molybdenum, tungsten), aluminum, iron, silicon, cobalt and nickel. Note that the above periodic table means a so-called long-period type periodic table.

In the above description, the case where cutting insert 100 has base member 10 has been described, but a portion of cutting insert 100 other than cutting part 20 may be also formed of the same sintered material as cutting part 20.

The embodiments disclosed herein are illustrative in all respects and should not be construed as limiting. The scope of the present invention is defined by the appended claims rather than the embodiments described above, and is intended to include all modifications within the scope and meaning equivalent to the appended claims.

### REFERENCE SIGNS LIST

10 base member, 10a top surface, 10b bottom surface, 10c side surface, 10d attachment portion, 11 through-hole, 20 cutting part, 20a rake face, 20b flank face, 20c cutting edge, 21 back metal, 100 cutting insert, S1 powder preparation step, S2 powder mixing step, S3 sintering step.

## Claims

1. A sintered material comprising diamond particles and a binder,
wherein each of the diamond particles has a boron concentration of 0.001 mass% to 0.1 mass%, and
the binder has a boron concentration of 0.01 mass% to 0.5 mass%.

2. The sintered material according to claim 1, wherein the binder has a boron concentration of 0.05 mass% to 0.5 mass%.

3. The sintered material according to claim 2, further comprising a compound precipitated within the binder,
wherein the compound contains at least two or more among cobalt, boron, and carbon, and
a value calculated by dividing a peak intensity of the compound in X-ray diffractometry by a peak intensity of diamond in X-ray diffractometry is 0.15 or less.

4. The sintered material according to claim 3, wherein the compound is at least one of Co_{2 2} B₄ C₂, W₂ Co_{2 1} B₆, W₂ Co₂ B₆, or CoWB.

5. The sintered material according to claim 3 or claim 4, wherein the value calculated by dividing the peak intensity of the compound in X-ray diffractometry by the peak intensity of diamond in X-ray diffractometry is 0.01 to 0.15.

6. The sintered material according to any one of claim 1 to claim 5, wherein a resistivity of the sintered material is 3.0 Ω·cm or less as measured with the binder being removed.

7. The sintered material according to any one of claim 1 to claim 6, wherein the diamond particles have an average particle size of 0.5 µm to 50 µm, and
a ratio of the diamond particles within the sintered material is 80 vol% to 99 vol%.

8. The sintered material according to any one of claim 1 to claim 7, wherein the binder contains at least one selected from the group consisting of an elemental metal, an alloy, and an intermetallic compound, and
the elemental metal, the alloy, and the intermetallic compound contain at least one metallic element selected from the group consisting of group 4 elements in the periodic table, group 5 elements in the periodic table, group 6 elements in the periodic table, iron, aluminum, silicon, cobalt, and nickel.

9. The sintered material according to any one of claim 1 to claim 8, wherein the binder at least contains cobalt.

10. A cutting tool comprising a cutting part,
wherein the cutting part is formed of the sintered material according to any one of claim 1 to claim 9.
